# EUROPEAN PATENT APPLICATION

(11) **EP 4 008 174 A1**
(43) Date of publication of application: **08.06.2022**
(21) Application number: 21167246.4
(22) Date of filing: 07.04.2021
(51) Int. Cl.: A01G 31/02, A01K 63/04

(54) **AQUAPONIC SYSTEM**

(30) Priority: 02.12.2020 IT 202000029546
(71) Applicant: Agri Island S.r.l., 00147 Roma RM (IT)
(72) Inventor: Ferrari, Giordano, 00147 Roma RM (IT); Lacquaniti, Pierpaolo, 00147 Roma RM (IT); Moresco, Andrea, 00147 Roma RM (IT)
(74) Representative: Perani & Partners S.p.A.

(57) **Abstract**

The present invention relates to an aquaponic system (1) comprising: a plurality of tanks connected together in fluid communication, the plurality of tanks comprising at least one first tank (2) for breeding fish species, one second tank (3) for growing plant species; a plurality of pipes (4) connecting the tanks in fluid communication; an aqueous fluid, configured to flow between the tanks through the pipes (4); a plurality of functional portions (5) located at the tanks and/or pipes (4), the functional portions (5) being configured to act upon a volume of fluid to change physical and/or chemical parameters of the volume of fluid; the aquaponic system (1) further comprises a plurality of sensors (6) arranged at the tanks and/or pipes (4), each sensor (6) being configured to generate and send a respective measurement signal (Sm) representative of the physical and/or chemical parameters of the volume of fluid; a control unit (7) in signal communication with the sensors (6) and with the functional portions (5), wherein the control unit (7) is configured to receive and process each measurement signal (Sm) to generate at least one actuation signal (Sa) configured to actuate the functional portions (5) to adjust the physical and/or chemical parameters.

## Description

### Field of the invention

The present invention relates to an aquaponic system.

The present invention can be advantageously employed for breeding fish species and growing plant species with aquaponic methods.

### Background art

Aquaponic systems for breeding fish species and growing plant species are known in the art.

These systems comprise a first tank for fish breeding and a second tank for plant growing. A third tank containing nitrifying bacteria is interposed between the fish tank and the plant tank. The tanks are in fluid communication via pipes, so that a water flow can be periodically exchanged between the fish tank and the plant tank through the third bacteria tank for water treatment. In particular, the water for breeding fish, which expel ammonia and release nutrients for plants, is treated by the third tank and transferred to the plants. Specifically, the nitrifying bacteria in the third tank convert ammonia into nitrates, which are useful for plant growth. Plants in turn assimilate nitrates and the other nutrients as they grow, thereby purifying water, which may flow back clean into the fish tanks.

In order to impart certain physical and/or chemical properties inside the tanks, and to monitor the actual conditions inside the tanks, the system comprises adjustment means and sensors respectively. Thus, the water in the tanks is in suitable conditions for growth of the respective species contained therein.

### Problem of the prior art

These systems require periodic actions by an operator, who must be suitably trained and on-site to manage the system, and the adjustment means in particular, to be able to adequately adjust water parameters.

### SUMMARY OF THE INVENTION

Therefore, the technical purpose of the present invention is to provide an aquaponic system that can obviate the aforementioned prior art drawbacks.

In particular, the object of the present invention is to provide an aquaponic system that can be used by untrained personnel, that requires less labor and also reduces consumption.

The aforementioned technical purpose and objects are substantially fulfilled by an aquaponic system that comprises the technical features as disclosed in one or more of the accompanying claims.

### Advantages of the Invention

In particular, the aquaponic system of the present invention solves the technical problem because the sensors are able to communicate with a control unit which in turn actuates the adjustment means to autonomously adjust such physical and/or chemical parameters.

This aquaponic system affords automated management of the operation of the entire plant, without requiring the use of trained personnel to carry out appropriate parameter-changing operations.

This aquaponic system can also optimize the operation of the plant.

### Brief description of figures

The characteristics and advantages of the present invention will result from the following detailed description of a possible practical embodiment, illustrated as a nonlimiting example in the annexed drawings, in which:

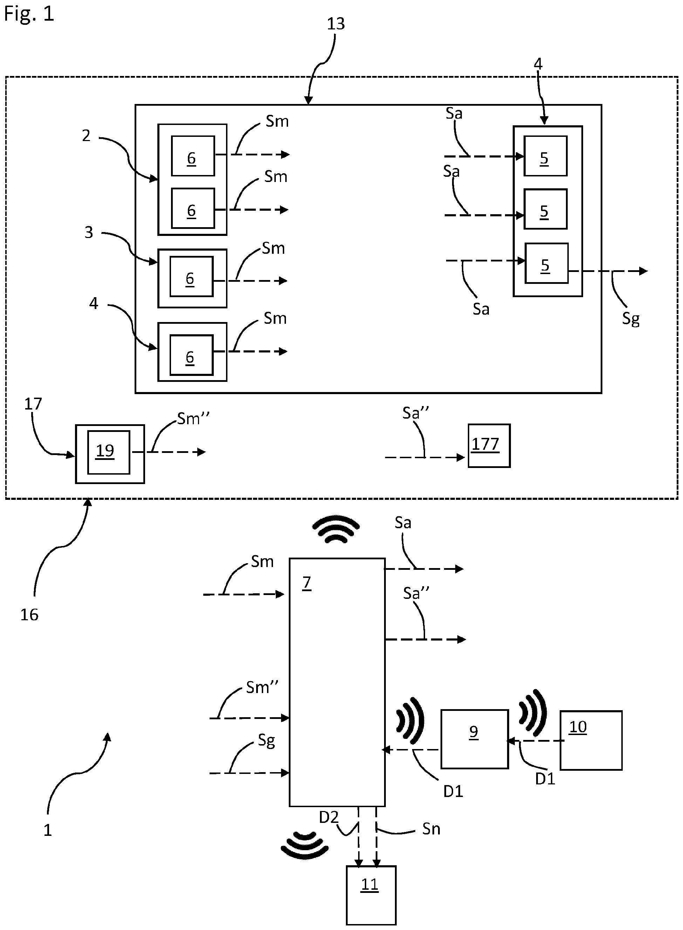

- Figure 1 schematically shows the operation of an aquaponic system of the present invention;
- Figure 2 shows a diagram of one embodiment of a portion of an aquaponic system of the present invention.

### DETAILED DESCRIPTION OF THE INVENTION

Referring to the accompanying drawings, the present invention relates to an aquaponic system designated by numeral 1.

The aquaponic system 1 comprises a plurality of tanks connected together in fluid communication. In particular, the plurality of tanks comprises at least one first tank 2 for breeding fish species and one second tank 3 for growing plant species. Preferably, the plurality of tanks comprises a third tank 12 which contains nitrifying bacteria.

The aquaponic system 1 comprises a plurality of pipes 4 connecting the tanks in fluid communication.

The aquaponic system 1 comprises an aqueous fluid, configured to flow between the tanks through the pipes 4.

Preferably, such an aqueous fluid is water or an aqueous-based nutrient solution. Reference will be made herein to water as an aqueous fluid, without prejudice to the general scope of the invention.

In operation, the tanks are filled with water and, in particular, the first tank 2 contains a fish species and the second tank 3 contains one or more plant species, thereby forming an ecosystem.

It should be noted that water is configured to flow between the first tank 2 and the second tank 3 through the third tank 12 comprising the bacteria. The latter convert the ammonia that has been expelled from the fish species into nitrates, so that the water transferred to the second tank 3 will be free of elements harmful to the plant species and rich in nutrients. It should be noted that conversion from ammonia to nitrates in the aquaponic system 1 may be carried out otherwise without providing the third tank 12.

The plurality of tanks further comprises reservoirs for collecting and/or treating the circulating aqueous fluid.

The aquaponic system 1 comprises a plurality of functional portions 5. These functional portions 5 are located at the tanks and/or pipes 4. The functional portions 5 are configured to act on a volume of fluid to modify physical and/or chemical parameters of the volume of fluid. Preferably, the functional portions 5 are located at the pipes 4. In particular, the functional portions 5 act on the fluid before or after entry thereof into one of the tanks. In other words, the circulating fluid is preferably acted upon as it flows into and/or out of the tank and not at a tank. Further details concerning the functional portions 5 will be provided hereinbelow.

The aquaponic system 1 of the present invention comprises a plurality of sensors 6 located at the tanks and/or pipes 4. In particular, each sensor 6 is configured to generate and send a respective measurement signal Sm representative of the physical and/or chemical parameters of the volume of fluid. Preferably, the sensors 6 are located at the tanks 2 and 3 to monitor the ecosystem therein. Further details concerning the sensors 6 will be provided hereinbelow.

The plurality of tanks, pipes 4, functional portions 5 and sensors 6 forms a system 13 according to the present invention.

The aquaponic system 1 comprises a control unit 7 in signal communication with the sensors 6 and with the functional portions 5. The control unit 7 is configured to receive and process each measurement signal Sm to generate at least one actuation signal Sa. This actuation signal Sa is configured to actuate the functional portions 5 to adjust the physical and/or chemical parameters. In other words, the plant 13 is autonomously managed by the control unit 7. The control unit 7 is configured to set proper conditions in the first tank 2 and the second tank 3 for the growth of fish and plant species by acting on the functional portions 5.

It should be noted that the aquaponic system 1 of the present invention comprises a memory unit 9 in signal communication with the control unit 7. According to a preferred embodiment, the memory unit 9 comprises first data D1 concerning ideal physical and/or chemical parameters for growing and breeding various plant and fish species with aquaponic methods. In other words, the first data D1 represent the conditions of optimal aquaponic growing and breeding of a fish and plant species and therefore vary according to the selected species.

The control unit 7 is configured to process the measurement signals Sm as a function of the first data D1 to generate the aforementioned actuation signal Sa. In other words, the first data D1 provide standard values of target conditions inside the tanks for each living species. By comparing the measurement signal Sm provided by each sensor 6, which contains the value of the specific condition, e.g. water temperature in a tank, and the first data D1, the control unit 7 sends the actuation signal Sa for the relevant parameter to be corrected by the corresponding functional portion 5 if wrong.

According to this embodiment, the first data D1 is pre-saved in the memory unit 9. Alternatively, the first data D1 is acquired by a network unit 10 external to the aquaponic system 1 and in signal communication with the memory unit 9.

Preferably, the control unit 7 is configured to monitor the growth parameters of the plant and fish species and generate second data D2 representative of the growth parameters.

The aquaponic system 1 preferably comprises a user interface 11. The user interface 11 is configured to display and manage physical and/or chemical parameters and/or the second data D2. The user interface 11 is in signal communication with the control unit 7 to adjust the physical and/or chemical parameters. Preferably, the user interface 11 is embodied by an App that is designed to be downloaded to a mobile device, such as a smartphone or a PC, or by an Internet page that can be accessed using credentials.

According to a preferred embodiment, the control unit 7 is configured to process the second data D2 and generate a technical report concerning a growing and breeding cycle running in the tanks as a function of the second data D2. Advantageously, the growth and breeding of the species that are being conducted may be studied and, if needed, be later reproduced under the same conditions.

Preferably, water inside the tanks has to be monitored for the following chemical and physical parameters: hydrostatic level, flow rate, temperature, pH, dissolved oxygen, conductivity, and also amount of nutrients, presence of pathogens (parasites, molds) and heavy metals, ammonia conversion rate. Further aspects to be monitored, e.g. reported by the second data D2, include species and number of plants, species and animal mass, visual aspect of the biological mass (plants and fish).

The plurality of functional portions 5 comprises specific stations configured to act upon the volume of fluid by a specific action. More in detail, the functional portions 5 comprise mechanical, electromechanical, thermal, hydraulic components, e.g. pumps or filters, but also heat pumps.

Preferably, the functional portions 5 comprise filtration stations 51 and/or sanitizing stations 52 of the fluid volume. Advantageously, water may be kept clean and pathogens may be removed to protect the ecosystem.

The filtration stations 51 include bag filters and/or cartridge filters and/or sand filters. Bag and/or cartridge filters are preferably made of polypropylene. Still preferably, sand filters are made of quartz sand.

More in detail, polypropylene filters may comprise activated carbon for adsorption of pollutants, if any, or chlorine. Polypropylene filters comprise twenty-micron or, more preferably, five-micron openings. In any case, the size of the openings can be modulated according to their specific application.

The sanitizing stations 52 comprise UV lamps and/or toroids located inside a pipe. Thus, water is sterilized without using chemicals. In particular, toroids are configured to generate a magnetic field in water, for example by altering the liquid absorption function on cell membranes of any pathogen contained therein and removing them.

Instead of or in addition to the above, the sanitizing treatment is carried out using UV lamps.

The specific stations also comprise heating and/or cooling stations, which are configured to increase and/or decrease the temperature of the circulating fluid. The heating stations comprise, for example, heat exchangers and/or heat pumps. Heat exchangers are, for example, plate heat exchangers.

Preferably, the functional portions 5 comprise two or more of each specific station. Advantageously, should a single station be inactive for some reason, for example if a fault occurs, the other station can perform the function of the first station on the volume of fluid without the system being blocked.

It should be noted that the plant 13 of the aquaponic system 1 of the present invention is configured to operate continuously. The control unit 7 maintains the chemical and/or physical parameters of water over time and keeps the plant 13 in operation, excluding any malfunctioning functional portions 5.

Preferably, the control unit 7 is configured to periodically query the various functional portions 5 to check their status and report any anomaly through the user interface 11. Preferably, a malfunctioning functional portion 5 is configured to generate and transmit a failure signal Sg to the control unit 7. The control unit 7 is configured to receive such failure signal Sg and isolate the corresponding functional portion 5. The control unit 7 is also configured to generate and send a warning signal Sn representative of the failure signal Sg to the user interface 11.

Preferably, the control unit 7 is configured to process the failure signals Sg and generate an error report as a function of the failure signals Sg.

Advantageously, the parameters of the plant 13 are adequately maintained and the operation of the aquaponic system 1 is preserved even in case of partial failure.

Therefore, according to a preferred embodiment of the aquaponic system 1, the plurality of tanks comprises a plurality of first tanks 2 for breeding fish species and a plurality of second tanks 3 for growing plant species. In other words, the aquaponic system 1 comprises two or more first tanks 2 for breeding fish species and two or more second tanks 3 for growing plant species.

Also, the pipes 4 are preferably arranged to form flow partitions and provide flow recirculation.

Shutdowns are advantageously avoided in the plant 13 in case of malfunction of a single component.

According to a preferred embodiment, the plurality of tanks comprises two or more settling tanks 8. Such settling tanks 8 are configured to collect organic sediments circulating with the aqueous fluid. In other words, the settling tanks 8 are adapted to accumulate waste and residues that fall into the water, for example dry leaves. The settling tanks 8 comprise filters for separating said organic sediments from water and cause them to be retained inside such tanks, so that the water that leaves them will be clean again.

Preferably, each tank is designed to rest on an insulating panel 18. Preferably, these panels are made of expanded polystyrene.

In the aquaponic system 1, the sensors 6 comprise at least one of the group comprising:
- dissolved oxygen probe (oximeter) D0: the oxygen dissolved in water is kept above 6mg/l in each portion of the plant 13;
- nutrient analyzer,
- pH-meter PH: the pH is caused to vary in a range from 6.7 to 7.2 according to the species cultivated in the second tank 3;
- redox meter: to control the oxidation-reduction potential and control the amount of any disinfecting agents;
- conductivity meter C: the salinity is kept constantly below the value of 1,500 µS/cm;
- flow switch: the flow rate must be slow to allow the grown species to absorb nutrients but also fast enough to avoid stagnation;
- level probe LIV: it preferably comprises floats which send a respective measurement signal Sm to the control unit; this signal is compared with the second data D2, with appropriate topping up if the threshold is not attained, by acting on the pumps;
- pressure switch P: to control the operation of the filtering stations;
- thermometer T: water temperature is maintained at 22 degrees ± 4 degrees.

Preferably, the aquaponic system 1 comprises a membrane compressor OX configured to provide oxygen in the form of low-pressure compressed air.

The aquaponic system 1 is a closed system which preferably comprises barrier means 14 to define a confined environment surrounding the plant 13 of the aquaponic system 1.

It should be noted that the system 13 of the present invention, as well as the barrier means 14, forms a greenhouse 16 according to the present invention. Such greenhouse 16 is given by the plant 13 and the environment surrounding the plant 13 and enclosed within the barrier means 14.

The barrier means 14 have lateral zones preferably formed with rigid panels, for example made of polycarbonate, for structural support, and a central zone, preferably made of a transparent plastic film. The barrier means 14 also have openable inlet/outlet zones for access to the system 13 and/or to air circulation. Preferably, the barrier means 14 comprise an anti-aphid net for limiting external contamination due to insects. In particular, the anti-aphid net is located at the aforementioned openable zones.

Preferably, the aquaponic system 1 comprises a lighting system (not shown in the attached drawings). The lighting system includes light sensors and adjustable lamps. The light sensors are programmable according to the grown and/or bred species. The intensity of light emitted by the lamps can be modulated according to the natural light available. Preferably, this step is also carried out by the control unit 7. Accordingly, the light sensors are in signal communication with the control unit 7 and are configured to send a respective measurement signal to the control unit 7. Depending on the measurement signal, the control unit 7 sends an actuation signal to the lamps for the plants to always receive the same quantity of light or in any case a predetermined quantity of light, for example varying over different times of the day.

Preferably, the aquaponic system 1 comprises a ventilation system 17 configured to ensure adequate air renewal. The ventilation system 17 comprises ventilation means located at the barrier means 14 and configured to force an air flow into and out of the greenhouse 16. For example, the ventilation means comprise an air extractor 177. The ventilation system also comprises a humidity sensor and/or a temperature sensor 19 located inside the greenhouse 16 to sense the humidity and temperature of the air in the greenhouse 16.

Preferably, this step is also carried out by the control unit 7. Accordingly, the humidity and/or temperature sensors 19 are in signal communication with the control unit 7 and are configured to send a respective measurement signal Sm" to the control unit 7 . Depending on the measurement signal Sm", the control unit 7 sends an actuation signal Sa" to the ventilation means. Air renewal may be also provided automatically by the ventilation system 17 for a preset number of times per hour. Preferably, the ventilation system 17 is configured to perform forty/sixty air changes per hour.

Preferably, the aquaponic system 1 comprises a camera (not shown in the attached drawings) configured to capture images of the tanks. The camera is located inside the greenhouse 16. The camera is in signal communication with the user interface 11. Accordingly, the greenhouse 16 may be remotely real-time monitored through the user interface 11.

Preferably, the aquaponic system 1 is configured to be supplied in pre-assembled form to be autonomously installed by users.

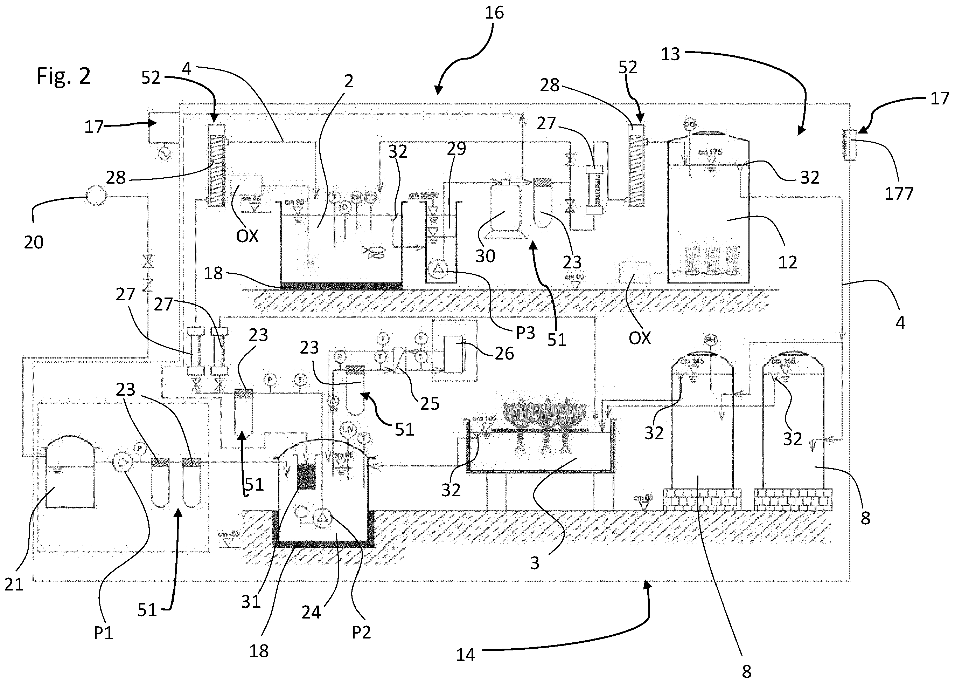

Particularly referring to Figure 2, an exemplary embodiment of a portion of an aqueous system 1 of the present invention will be described below.

Water is transferred from a tank truck 20, or a local water supply network, to a first reservoir 21, which is configured to carry out a first disinfection in which water is treated to prepare it for the operating cycle. Then, the fluid is pumped by a pump P1 into a filtration station 51 comprising polypropylene containers, which comprise polypropylene cartridge filters 23. These cartridge filters 23 are embodied by filters with twenty-micron or five-micron openings and by an activated carbon filter. Water is then introduced into a second reservoir 24 from which the fluid is branched into various ways. The water in the second reservoir 24 is partly pumped by a pump P4 toward a filtration station 51 after which it passes through a plate heat exchanger 25, connected to a heat pump 26, and returned to the second reservoir 24. In particular, water is heated using an independent dual-circuit configuration, with the plate heat exchanger 25 ensuring that water is free of any contamination. Part of the water in the second reservoir 24 is also pumped by a pump P2 to a filtration station 51 and then the flow is branched to a flow meter 27, passed through a UV lamp 28 for sterilization and fed into the first tank 2 for breeding fish species. The second branch feeds into the second tank 3 for growing plant species, after a passage through a further flow meter 27. Then, the water flow returns to the second reservoir 24 from the second tank 3 by means of a drain 32, to be channeled again as described above. On the other hand the flow is discharged from the first tank 2 to a third reservoir 29 and then pumped by a pump P3 into a quartz sand filter 30. Now, part of the flow is sent to recirculation to return to the second reservoir 24 after passing through a polypropylene bag filter 31. The other part of the flow is transferred to a polypropylene cartridge filter 23. Then, the fluid is in part returned to the first tank 2 and in part transferred to a flow meter 27 and, after passing a UV lamp 28, reaches the third tank 12 in which biological filtering is carried out by bacteria. From here, the flow is transferred, via a drain 32, into two respective settling tanks 8, connected to each other, from which it is discharged to the second tank 3 and finally again to the second reservoir 24 to repeat the cycle.

The drains 32 are preferably located at the free surface.

## Claims

1. An aquaponic system (1) comprising:
- a plurality of tanks connected together in fluid communication, said plurality of tanks comprising at least:
- a first tank for breeding fish species,
- a second tank for growing plant species,
- a plurality of pipes (4), connecting the tanks in fluid communication;
- an aqueous fluid, configured to flow between the tanks through the pipes (4);
- a plurality of functional portions (5) located at said tanks and/or pipes (4), said functional portions (5) being configured to act upon a volume of fluid to change physical and/or chemical parameters of the volume of fluid;
**characterized in that it comprises**
- a plurality of sensors (6) arranged at said tanks and/or pipes (4), each sensor (6) being configured to generate and send a respective measurement signal (Sm) representative of said physical and/or chemical parameters of the volume of fluid;
- a control unit (7) in signal communication with the sensors (6) and with the functional portions (5), said control unit (7) being configured to receive and process each measurement signal (Sm) to generate at least one actuation signal (Sa), said actuation signal (Sa) being configured to actuate the functional portions (5) to adjust said physical and/or chemical parameters.

2. An aquaponic system (1) as claimed in claim 1, wherein said plurality of tanks comprises a plurality of first tanks (2) for breeding fish species and a plurality of second tanks (3) for growing plant species.

3. An aquaponic system (1) as claimed in claim 1 or 2, wherein said functional portions (5) are located at said pipes (4).

4. An aquaponic system (1) as claimed in any of the preceding claims, wherein said plurality of functional portions (5) comprises specific stations configured to act upon the volume of fluid with a specific action, said functional portions (5) comprising two or more of each specific station.

5. An aquaponic system (1) as claimed in any of the preceding claims, wherein said functional portions (5) comprise filtering stations (51) and/or sanitizing stations (52) for filtering and/or sanitizing the volume of fluid.

6. An aquaponic system (1) as claimed in claim 5, wherein said filtering stations (51) comprise polypropylene filters and/or quartzite filters.

7. An aquaponic system (1) as claimed in claim 5 or 6, wherein said sanitizing stations (52) comprise UV lamps and/or toroids.

8. An aquaponic system (1) as claimed in any of the preceding claims, wherein said plurality of tanks comprises two or more settling tanks (8) configured to collect organic sediments circulating with the aqueous fluid.

9. An aquaponic system (1) as claimed in any of the preceding claims, comprising a memory unit (9) in signal communication with the control unit (7), said memory unit (9) comprising first data (D1) concerning ideal physical and/or chemical parameters for growing and breeding various plant and fish species with aquaponic methods, said control unit (7) being configured to process said measurement signals (Sm) as a function of said first data (D1) to generate said actuation signal (Sa).

10. An aquaponic system (1) as claimed in claim 9, wherein said first data (D1) is prestored in the memory unit (9) or acquired from a network unit (10) in signal communication with the memory unit (9).

11. An aquaponic system (1) as claimed in any of the preceding claims, wherein said sensors (6) comprise at least one selected from the group comprising:
oximeter, nutrient analyzer, pH meter, redox meter, conductivity meter, flow switch, level probe, pressure switch, thermometer.

12. An aquaponic system (1) as claimed in any of the preceding claims, wherein said control unit (7) is configured to monitor growth parameters of said plant and fish species and generate second data (D2) representative of said growth parameters.

13. An aquaponic system (1) as claimed in claim 12, comprising a user interface (11) configured to display said physical and/or chemical parameters and/or said second data (D2), said user interface (11) being in signal communication with the control unit (7) to adjust said physical and/or chemical parameters.

14. An aquaponic system (1) as claimed in claim 12 or 13, wherein the control unit (7) is configured to process said second data (D2) and generate a technical report concerning a growing and breeding cycle running in the tanks as a function of said second data (D2).
